# EUROPEAN PATENT SPECIFICATION

(11) **EP 2 591 574 B1**
(45) Date of publication and mention of the grant of the patent: **05.09.2018**
(21) Application number: 11807006.9
(22) Date of filing: 11.07.2011
(51) Int. Cl.: H04L 29/06, H04L 12/28, G06F 21/60

(54) **METHOD AND SYSTEM FOR SECURING ACCESS TO CONFIGURATION INFORMATION STORED IN UNIVERSAL PLUG AND PLAY DATA MODELS**
VERFAHREN UND SYSTEM ZUR SICHERUNG DES ZUGANGS ZU IN UNIVERSELLEN PLUG-AND-PLAY-DATENMODELLEN GESPEICHERTEN KONFIGURATIONSINFORMATIONEN
PROCÉDÉ ET SYSTÈME POUR SÉCURISER UN ACCÈS À DES INFORMATIONS DE CONFIGURATION STOCKÉES DANS DES MODÈLES DE DONNÉES DE SERVICE UPNP

(30) Priority: 10.07.2010 IN CH19662010
(43) Date of publication of application: 15.05.2013
(73) Proprietor: Samsung Electronics Co., Ltd., Gyeonggi-do 443-742 (KR)
(72) Inventor: VEDULA, Kiran Bharadwaj, Bangalore 560093 (IN); LEE, Jong-Hyo, Bangalore 560093 (IN)
(74) Representative: HGF Limited
(86) International application number: PCT/KR2011/005070
(87) International publication number: WO 2012/008721

(56) References cited:
- US-A1- 2005 138 179
- US-A1- 2007 208 948
- US-A1- 2007 254 630
- US-A1- 2008 022 362
- US-A1- 2010 049 965
- US-A1- 2010 095 356
- GÃ Â 1/4 NTER KARJOTH ET AL: "Implementing ACL-Based Policies in XACML", COMPUTER SECURITY APPLICATIONS CONFERENCE, 2008. ACSAC 2008. ANNUAL, IEEE, PISCATAWAY, NJ, USA, 8 December 2008 (2008-12-08), pages 183-192, XP031376774, ISBN: 978-0-7695-3447-3
- CRIDLIG V ET AL: "Role-Based Access Control for XML enabled multi-protocol management gateways", IEEE TRANSACTIONS ON NETWORK AND SERVICE MANAGEMENT, IEEE, US, vol. 1, no. 1, 1 January 2006 (2006-01-01) , pages 22-32, XP011253107, ISSN: 1932-4537
- "Universal Plug and Play Device Architecture, UPnP, Version 1.0", INTERNET CITATION, 8 June 2000 (2000-06-08), XP002210614, Retrieved from the Internet: URL:http://www.upnp.org [retrieved on 2002-06-08]

## Description

### Technical Field

The present invention relates to the field of universal plug and play (UPnP) home network system, and more particularly relates to accessing of UPnP device management data models.

### Background Art

Universal plug and play (UPnP) is a set of computer network protocols promulgated by the UPnP forum. The goals of UPnP are to allow access to connect seamlessly and to simplify implementation of networks in home (e.g., data sharing, communications, and entertainment) and corporate environments. These goals are achieved by defining and publishing UPnP device control protocols built upon open, Internet-based communication standards.

The UPnP technology can cater to a wide range of devices in a home network. The UPnP provides discovery, control and eventing mechanisms. Discovery is enabled using SSDP protocol. Eventing follows GENA protocol. Using these technologies, UPnP makes availability and unavailability of the UPnP devices on the fly to the other devices in the UPnP home network.

UPnP architecture allows peer-to-peer networking of personal computers (PCs), networked appliances, and wireless devices. It is distributed, open architecture based on established standards such as TCP/IP, UDP, HTTP and XML. The UPnP architecture supports zero configuration networking. For example, an UPnP compatible device from any vendor can dynamically join a network, obtain an IP address, announce its name, convey its capabilities upon request, and learn about the presence and capabilities about other devices. On the other hand, the UPnP devices can leave the UPnP home network automatically without leaving any unwanted state information.

The foundation for UPnP networking is IP addressing. Each UPnP device includes a DHCP client which searches for a DHCP server when the UPnP device is first connected to the UPnP network. If no DHCP server is available, the UPnP device assigns itself an address. If during the DHCP transaction, the UPnP device obtains a domain name, for example, through the DNS server or via DNS forwarding, the UPnP device uses that name in subsequent network operations; otherwise the UPnP device uses its IP address.

UPnP defines device protection service as a generic security solution which can be used by all services defined in the UPnP. Device protection service defines concept of roles. All control points or control devices are assigned different roles, namely public, basic and admin for performing UPnP actions. Different DCPs and Vendors are free to extend these set of roles.

UPnP device management service defines concept of data models. Data model is a tree representation of various device and service configuration related information. Data model constitute various kinds of nodes such as leaf nodes, single instance nodes, multi-instance nodes and instance nodes. Data models may contain sensitive information which needs to be protected. Also, some of the configuration information stored in the data models may be irrelevant to some of the control points or users in home network environment. Current device protection service provides entire configuration information stored in the data models to a control point when requested. As a consequence, the control point gets access to sensitive and irrelevant information provided in the entire configuration information.

US Patent Application Publication No. 2007/208948 entitled "System and method for configuring security in a plug-and-play architecture" in the name of Nokia Corp. discloses an Access Control List (ACL) based method of restricting access to a service in a UPnP device. The document discloses restricting access based on user IDs and specifying access to certain tasks.

"Implementing ACL-based policies in XACML" in the name of Gunther Karjoth et al from Computer Security Applications Conference, 2008 discloses a mapping of the IMB Tivoli Access Manager into XACML in an effort to integrate legacy systems, typically not compatible with XACML, with XACML systems. The system checks ACL, Protected Object Policies (POPs) and Authorisation Rules in order to manage access.

Patent Application Publication No. 2008/022362 entitled "Method and system of synchronised access control in a Web Services Environment" in the name of IBM Corp discloses the use Access Controls of a Web Services Description Language (WSDL) defined protected object space. A protected object space may comprise one or more objects, which may be arranged in a hierarchical structure. The objects within the space may have ACLs associated therewith, which may vary depending on the type of object in question.

"Role-based Access control for XML enabled multi-protocol management gateways" Cridlig et al (XP011253107) discloses a method of providing security for management frameworks based on multi-protocol gateways, which may be implemented in an XML-based management framework. The authors aim to provide consistent access control policies locally on each device and also globally through the managed domain.

### Disclosure of Invention

### Technical Problem

Therefore, there exists a need to provide access control for viewing, reading as well as modifying configuration information stored in UPnP device management data models, thereby providing protection to configuration information stored in the data models.

### Solution to Problem

The present invention provides a method and system for securing access to configuration information stored in universal plug and play (UPnP) data models. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

The terms "UPnP data model" and "data model" are interchangeably used throughout the document.

### Advantageous Effects of Invention

As described above, according to the present invention, it is possible to provide access control for viewing, reading as well as modifying configuration information stored in UPnP device management data models, thereby providing protection to configuration information stored in the data models.

### Brief Description of Drawings

Figure 1 is a process flow chart illustrating an exemplary method of providing secured access to configuration information stored in universal plug and play (UPnP) data models, according to one embodiment.
Figure 2 is a schematic representation of an exemplary UPnP data model having multiple nodes, in the context of the invention.
Figure 3 is a flow diagram of an exemplary method of securing access to configuration information of a data model, according to one embodiment.
Figure 4 is a flow diagram of an exemplary method of modifying a multi-instance node of a data model by a control point and securing the modified multi-instance node from another control point, according to one embodiment.
Figure 5 is a block diagram illustrating a home network system for securing access to configuration information stored in an UPnP data model, according to one embodiment.
Figure 6 is a block diagram illustrating various components of the control device of the home network system such as those shown in Figure 5 for implementing embodiments of the present subject matter.

The drawings described herein are for illustration purposes only and are not intended to limit the scope of the present disclosure in any way.

### Mode for the Invention

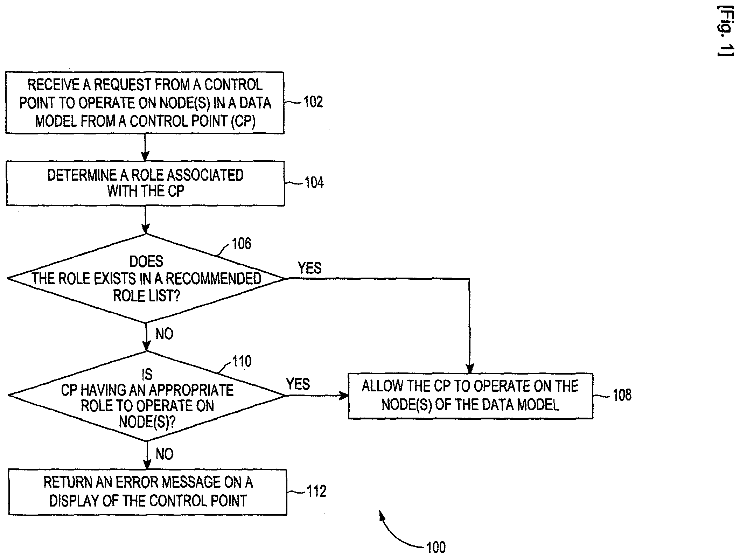

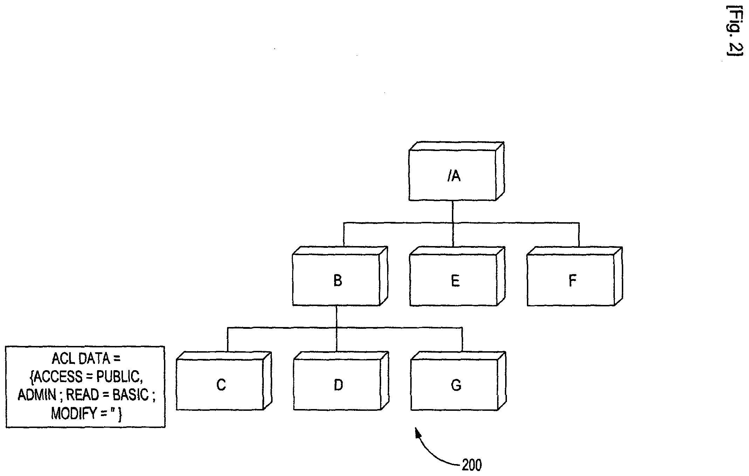

Figure 1 is a process flow chart 100 illustrating an exemplary method of providing secured access to configuration information stored in UPnP data models, according to one embodiment. At step 102, a request to operate on node(s) of a data model is received from a control point in a home network environment. A data model includes a plurality of nodes such as leaf nodes, single instance nodes, multi-instance nodes, and instance nodes. Each of the plurality of nodes stores configuration information associated with control points in the home network environment. The configuration information may be a service configuration information and device configuration information. With reference to Figure 2, a data model 200 is shown and includes node / A/B, node /A/E, node /A/F, node /A/B/C, node /A/B/D, and node /A/B/G to store configuration information. The control point may request to operate on any of the nodes of the data model.

At step 104, a role associated with the control point is determined based on the request. Each of the control points in the home network environment is assigned a role to operate on the associated configuration information. For example, the control point associated with the request may be assigned a public role, a basic role, or an admin role. It can be noted that, any other type of roles such as vendor specified roles may be assigned to the control point.

At step 106, it is determined whether the role assigned to the control point is in a recommended role list associated with the operation specified in the request (e.g., access, read, or modify). The recommended role list includes a list of roles associated with control points in the home network environment recommended for performing access, read, and modify operation on the nodes of the data model. If the role is in the recommended role list, then at step 108, the control point is allowed to operate on the node(s) of the data model.

For example, if, at step 102, the control point has requested to access the node / A/B/C of the data model 200, then the control device allows the control point to access the node /A/B/C based on the recommended role list. If the request is associated with read operation, then the control device allows the control point to read the configuration information stored in the node /A/B/C of the data model 200. Alternatively, if the control point request a modify operation, then the control device allows the control point to modify the node /A/B/C (e.g., add another node, or remove a node). In some embodiments, only associated node(s) of the data model are displayed on the display of the control point. In these embodiments, remaining nodes (other than requested) of the data model are not displayed on the display of the control point.

If the role is not in the recommended role list, then at step 110, it is determined whether the control point is having an appropriate role to operate on the node(s) of the data model. In one embodiment, the determination is made using access control list (ACL) data associated with requested node(s) of the data model. It can be noted that ACL data is a node property. ACL data associated with a node includes a node identifier being associated with an access element, read element and/or modify element. The access element, read element and modify element indicates a role type that is authorized to perform each of access, read and modify operations on the node associated with the corresponding node identifier. Exemplary ACL data of each node along with the corresponding node identifier is illustrated in the below Table 1.

### Table 1

**[Table 1]**

| NODE IDENTIFIER | ACL DATA |
|---|---|
| /A/B/C | ACCESS=PUBLIC, ADMIN; READ=BASIC; MODIFY=" |
| /A/B | ACCESS=BASIC; READ=ADMIN; MODIFY=ADMIN |
| /A/B/D | ACCESS=PUBLIC, READ=BASIC; MODIFY=ADMIN |

With reference to Figure 2 and Table 1, the control point having public role is permitted to access the node with node identifier /A/B/C, while the control point having basic role is allowed to read the node with node identifier /A/B/C. However, no role is authorized to modify the node with node identifier /A/B/C. The control point having basic role is permitted to access the node with node identifier /A/B, and the control point having admin role is allowed to read and/or modify the node with node identifier /A/B. Similarly, the control point having public role is permitted to access the node with node identifier /A/B/D, the control point having basic role is allowed to read the node with node identifier /A/B/D, and the control point having admin role is allowed to modify the node with node identifier /A/B/D. Exemplary XML schemas of the ACL data for the node identifiers /A/B/C, /A/B, and /A/B/D are given in Appendices A, B, and C respectively.

Referring back to Figure 1, the determination as to whether the control point should be allowed to operate on node(s) based on ACL data of the node(s) is performed as follows. At first, a node identifier associated with a node indicated in the request is determined. Then, ACL data associated with the node for which an operation is requested is retrieved. Further, it is determined whether the role associated with the control point matches a role authorized to perform requested operation on the node in the ACL data. If match is found, it is determined whether there is any other node for which a request is made to operate. If there is any node left, the above steps are repeated till all the nodes are processed. If there is no node left for processing and a match is found for all node(s) requested, then step 108 is performed. If no match is found in one or more node(s) requested, then an error message is returned on the display of the control point, at step 112.

For example, consider that the control point has requested a read operation on a node /A/B/D and a role associated with the control point is public role. As per Table 1, the ACL data associated with the node /A/B/D indicates "Access=Public, Read=Basic, and Modify=Admin". Therefore, an error message is returned denying read operation on the node /A/B/D. However, if the control point requests an access operation on the node /A/B/D, then the control point is allowed to perform an access operation on the node /A/B/D as the access element indicates a public role for the node /A/B/D in the Table 1.

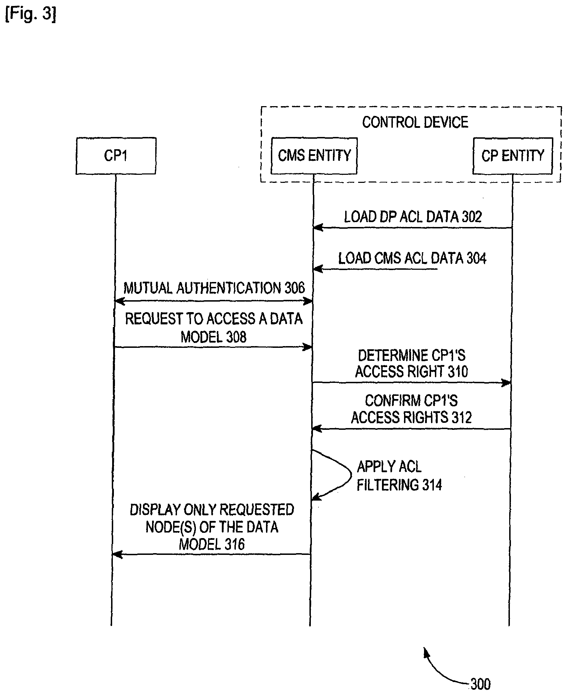

Figure 3 is a flow diagram 300 of an exemplary method of securing access to configuration information of a data model, according to one embodiment. At step 302, a device protection (DP) entity provides ACL data associated with a device protection (DP) service to a configuration management service (CMS) entity. At step 304, the CMS entity is loaded with CMS ACL data through out-of-band channel. At step 306, the CMS entity and the CP1 are mutually authenticated. At step 308, the CP1 sends a request to access a data model to the CMS entity.

At step 310, the CMS entity checks with the DP entity whether the CP1 is having a right to access the data model. The DP entity determines whether the role of the CP1 is present in the recommended role list. The DP entity finds that CP1 does not have right to access the data model. At step 312, the DP entity confirms that CP1 does not have right to access the data model. At step 314, the CMS entity determines whether the CP1 has an appropriate role to access requested node(s) of the data model and finds that the CP1 have access permission to access the node(s). Accordingly, at step 316, the CMS entity returns the data model with only the requested node(s) to the CP1 while hides the remaining nodes from the CP1.

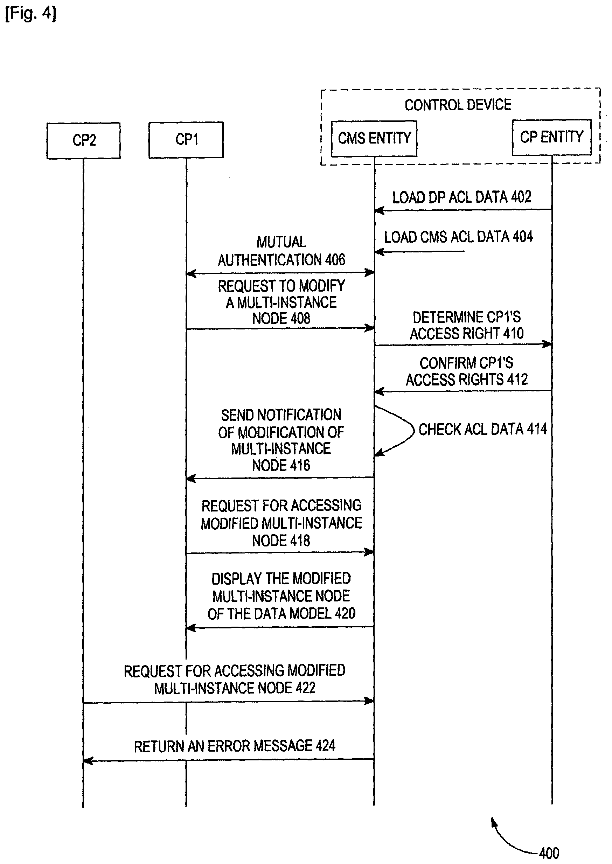

Figure 4 is a flow diagram 400 of an exemplary method of modifying a multi-instance node of a data model by a control point and securing the modified multi-instance node from another control point, according to one embodiment. At step 402, a device protection (DP) entity provides ACL data associated with a device protection (DP) service to a configuration management service (CMS) entity. At step 404, the CMS entity is loaded with CMS ACL data through out-of-band channel. At step 406, the CMS entity and the CP1 are mutually authenticated. At step 408, the CP1 sends a request to modify a multi-instance node of a data model to the CMS entity.

At step 410, the CMS entity checks with the DP entity whether the CP1 is having an access right to modify the multi-instance node of the data model. The DP entity determines whether the role of the CP1 is present in the recommended role list. The DP entity finds that CP1 does not have access right to modify the multi-instance node of the data model. At step 412, the DP entity confirms that CP1 does not have the access right to modify the multi-instance node of the data model. At step 414, the CMS entity determines whether the CP1 has an appropriate role to modify the multi-instance node of the data model based on CMS ACL data and finds that the CP1 have appropriate role to modify the multi-instance node. Accordingly, at step 416, the CMS entity notifies to the CP1 that the multi-instance node is successfully modified.

At step 418, the CP1 request the CMS entity to view the modified multi-instance node of the data model. At step 420, the CMS entity displays the modified multi-instance node of the data model to the CP1. Now, another control point (CP2) tries to access the modified multi-instance node of the data model and sends a request to the CMS entity, at step 422. At step 424, the CMS entity returns an error message to the CP2 as the CP2 does not have a matching role for reading the configuration information in the modified multi-instance node. For example, the CMS entity defines a multi-instance node called "/UPnP/DM/DeviceInfo/ PhysicalDevice/Network-Interface/#/" and the CP1 is allowed to invoke a modify command on the multi-instance node to create Networklnterfacel. However, the CP2 is not allowed to read the configuration information related to newly created network interface based on the ACL data of the multi-instance node.

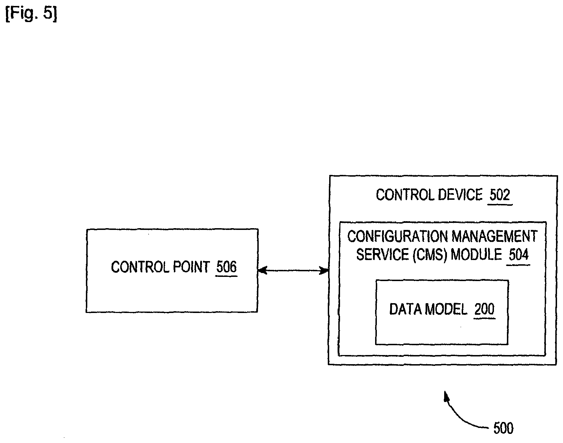

Figure 5 is a block diagram illustrating a home network system 500 for securing access to configuration information stored in an UPnP data model 200, according to one embodiment. In Figure 5, the home network system 500 includes a control device 502 and a control point 506. According to the present invention, the control device 502 includes a configuration management service (CMS) module 504 having the data model 200.

In an exemplary operation, the control point 506 invokes a request to operate on a node(s) of the data model 200 associated with a configuration management service. The CMS module 504 determines a role associated with the control point 506 based on the request. The CMS module 504 determines whether the role associated with the control point 506 is in a recommended role list. If the role is in the recommended role list, then the CMS module 504 allows the control point 506 to access/read/modify the node(s) of the data model 200. If the role is not present in the recommended role list, the CMS module 504 determines whether the control point 506 is having an appropriate role to operate on the node(s) of the data model 200 based on ACL data of the node(s). Based on the determination, the CMS module 504 either allows the control point 506 to access/read/modify the node(s) of the data model 200 or returns an error message to the control point 506. It is understood that, the CMS module 504 secures access to configuration information stored in an UPnP data model in accordance with the one or more embodiments illustrated in Figures 1-4.

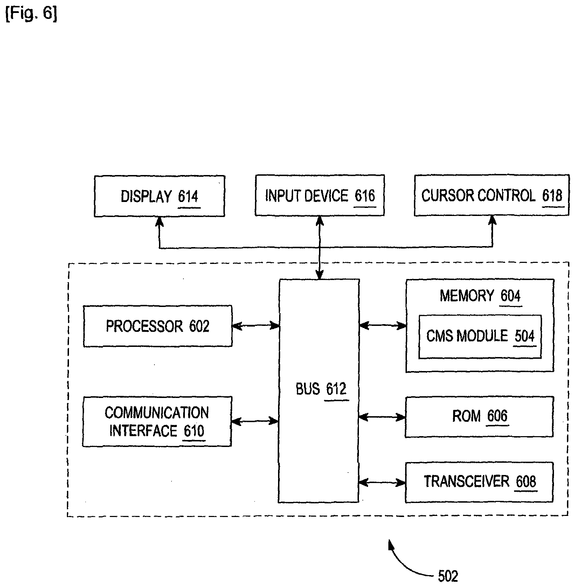

Figure 6 is a block diagram illustrating various components of the control device 502 of the home network system 500 such as those shown in Figure 5 for implementing embodiments of the present subject matter. In Figure 6, the control device 502 includes a processor 602, memory 604, a read only memory (ROM) 606, a transceiver 608, a bus 610, a communication interface 612, a display 614, an input device 616, and a cursor control 618.

The processor 602, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 602 may also include embedded controllers, such as generic or programmable logic devices or arrays, application specific integrated circuits, single-chip computers, smart cards, and the like.

The memory 604 and the ROM 606 may be volatile memory and non-volatile memory. The memory 604 includes the CMS module 504 for securing access to configuration information stored in an UPnP data model, according to one or more embodiments described in Figures 1 through 5. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, Memory Sticks™, and the like.

Embodiments of the present subject matter may be implemented in conjunction with modules, including functions, procedures, data structures, and application programs, for performing tasks, or defining abstract data types or low-level hardware contexts. Machine-readable instructions stored on any of the above-mentioned storage media may be executable by the processor 602. For example, a computer program may include machine-readable instructions capable of securing access to configuration information stored in an UPnP data model, according to the teachings and herein described embodiments of the present subject matter. In one embodiment, the program may be included on a compact disk-read only memory (CD-ROM) and loaded from the CD-ROM to a hard drive in the non-volatile memory. The machine-readable instructions may cause the control device 502 to encode according to the various embodiments of the present subject matter.

The transceiver 608 may be capable of receiving a request to operate on a node(s) of a data model and authorizing the control point 506 to operate on the node(s) of the data model based on the role of the control point 506 and ACS data of the node(s). The bus 610 acts as interconnect between various components of the control device 502. The components such as communication interfaces 612, the display 614, the input device 616, and the cursor control 618 are well known to the person skilled in the art and hence the explanation is thereof omitted.

The present embodiments have been described with reference to specific example embodiments; it will be evident that various modifications and changes may be made to these embodiments without departing from the scope of the invention as defined by the appended claims. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

### APPENDIX 'A'

<ACLData>
<NodeIdentifier> /A/B/C </NodeIdentifier>
<Access> Public </Access>
<Read> Basic </Read>
<Modify> None </Modify>
<ACLData>

### APPENDIX 'B'

<ACLData>
<NodeIdentifier> /A/B </NodeIdentifier>
<Access> Public </Access>
<Read> Admin </Read>
<Modify> Admin </Modify>
<ACLData>

### APPENDIX 'C'

<ACLData>
<NodeIdentifier> /A/B/D </NodeIdentifier>
<Access> Public </Access>
<Read> Basic </Read>
<Modify> Admin </Modify>
<ACLData>

## Claims

1. A computer-implemented method for securing access to configuration information stored in data models (200) in a home network environment having at least one control point (506) and at least one control device (502), the method comprising:
by the at least one control device (502) receiving (102), from a control point (506), a request to operate on at least one node of a data model (200), wherein the data model (200) includes a plurality of nodes, where each of the plurality of nodes represents configuration information;
determining (104) a role associated with the control point (506) based on the received request;
determining (106) whether the role associated with the control point (506) is in a recommended role list associated with the received request;
allowing (108), if the role associated with the control point (506) is in the recommended role list associated with the received request, the control point (506) to operate on the at least one node of the data model (200);
determining (110), if the role associated with the control point (506) is not in the recommended role list associated with the received request, whether the control point (506) has a role appropriate for operating with respect to the at least one node of the data model (200) based on Access Control List, ACL, data associated with each of the at least one node;
allowing (108), if the control point (506) has a role appropriate for operating with respect to the at least one node of the data model (200) based on the ACL data associated with each of the at least one node, the control point (506) to operate on the at least one node of the data model (200); and
returning (112), if the control point (506) does not have a role appropriate for operating with respect to the at least one node of the data model (200) based on the ACL data associated with each of the at least one node, an error message on a display of the control point (506).

2. The method of claim 1, wherein the request to operate on the data model (200) includes a request to perform one operation selected from a group including an access operation, a modify operation, and a read operation on the data model (200).

3. The method of claim 1, wherein the at least one node includes leaf nodes, single instance nodes, multi-instance nodes, and instance nodes.

4. The method of claim 1, wherein the role associated with the control point (506) is one role selected from a group including a basic role, a public role, an admin role, and a vendor defined role.

5. The method of claim 1, wherein the ACL data associated with each of the at least one node includes a node identifier that is associated with an access element, a read element, and a modify element.

6. The method of claim 2, wherein allowing the control point (506) to operate on the at least one node of the data model (200) comprises:
enabling the control point (506) to access configuration information stored in the at least one node of the data model (200).

7. The method of claim 2, wherein allowing the control point (506) to operate on the at least one node of the data model (200) comprises:
enabling the control point (506) to read at least one node associated with the at least one node of the data model (200).

8. The method of claim 2, wherein allowing the control point (506) to operate on the at least one node of the data model (200) comprises:
enabling the control point (506) to modify at least one node associated with the at least one node of the data model (200).

9. The method of claim 1, wherein determining whether the control point (506) has a role appropriate for operating with respect to the at least one node of the data model (200) based on the ACL data associated with each of the at least one node comprises:
a. determining a node identifier associated with a node of the data model (200) in the received request;
b. retrieving the ACL data associated with the node of the data model (200) based on the node identifier;
c. determining whether the role associated with the control point (506) matches with a role authorized to perform the requested operation on the node in the ACL data;
d. determining, if the role associated with the control point (506) matches with a role authorized to perform the requested operation on the node in the ACL data whether there is any other node left in the received request;
repeating, if there is another node left in the received requested, the above a, b, c, d steps until all of the nodes are processed;
allowing, if there is not another node left in the received request, the control point (506) to operate on at least one node of the data model (200).

10. The method of claim 9, wherein determining whether the role associated with the control point matches with any role in the ACL data associated with the node comprises:
returning, if the role associated with the control point does not match with any role in the ACL data associated with the node, an error message on the display of the control point (506).

11. An apparatus comprising:
a processor;
memory coupled to the processor;
a Configuration Management Service, CMS, module (504) included within the processor for receiving, from a control point (506), a request to operate on at least one node of a data model (200), wherein the data model (200) includes a plurality of nodes, where each of the plurality of nodes represents configuration information, determining a role associated with the control point (506) based on the received request, determining whether the role associated with the control point (506) is in a recommended role list associated with the received request, allowing, if the role associated with the control point (506) is in the recommended role list associated with the received request, the control point to operate on the at least one node of the data model (200), determining, if the role associated with the control point (506) is not in the recommended role list associated with the received request, whether the control point (506) has a role appropriate for operating with respect to the at least one node of the data model (200) based on Access Control List, ACL, data associated with each of the at least one node, allowing, if the control point (506) has a role appropriate for operating with respect to the at least one node of the data model (200) based on the ACL data associated with each of the at least one node, the control point (506) to operate on the at least one node of the data model (200), and returning, if the control point (506) does not have a role appropriate for operating with respect to the at least one node of the data model (200) based on the ACL data associated with each of the at least one node, an error message on a display of the control point (506).

12. The apparatus of claim 11, wherein the request to operate on the data model (200) includes a request to perform one operation selected from a group including an access operation, a modify operation, and a read operation on the data model (200).

13. The apparatus of claim 11, wherein the role associated with the control point (506) is one of basic role, public role, admin role, and vendor defined roles.

14. The apparatus of claim 11, wherein the ACL data associated with each of the at least one node includes a node identifier that is associated with an access element, a read element, and a modify element.

15. A home network system comprising:
at least one control point (506) for invoking a request to operate on one or more nodes of a data model (200), wherein the data model (200) comprises a plurality of nodes, each of the plurality of nodes representing configuration information; and
at least one control device communicatively coupled to the at least one control point (506) for determining a role associated with the at least one control point (506) based on the received request, determining whether the role associated with the at least one control point (506) is in a recommended role list associated with the received request, allowing, if the role associated with the at least one control point (506) is in the recommended role list associated with the received request, the at least one control point (506) to operate on the at least one node of the data model (200), determining, if the role associated with the at least one control point (506) is not in the recommended role list associated with the received request, whether the at least one control point (506) has a role appropriate for operating with respect to the at least one node of the data model (200) based on Access Control List, ACL, data associated with each of the at least one node, allowing, if the at least one control point (506) has a role appropriate for operating with respect to the at least one node of the data model (200) based on the ACL data associated with each of the at least one node, the at least one control point (506) to operate on the at least one node of the data model (200), and returning, if the at least one control point (506) does not have a role appropriate for operating with respect to the at least one node of the data model (200) based on the ACL data associated with each of the at least one node, an error message on a display of the at least one control point (506).

## Patentansprüche

1. Durch einen Computer umgesetztes Verfahren zum Sichern des Zugriffs auf Konfigurationsinformationen, die in Datenmodellen (200) in einer Heimnetzwerkumgebung mit mindestens einem Kontrollpunkt (506) und mindestens einer Kontrolleinheit (502) gespeichert sind, wobei das Verfahren aufweist:
Empfangen (102) durch die mindestens eine Kontrolleinheit (502) von einer Anforderung von einem Kontrollpunkt (506), auf mindestens einem Knoten eines Datenmodells (200) zu arbeiten, wobei das Datenmodell (200) eine Mehrzahl von Knoten enthält, wobei jeder der Mehrzahl von Knoten Konfigurationsinformationen darstellt;
Bestimmen (104) einer dem Kontrollpunkt (506) zugehörigen Rolle auf Grundlage der empfangenen Anforderung;
Bestimmen (106), ob die dem Kontrollpunkt (506) zugehörige Rolle sich in einer empfohlenen Rollenliste befindet, die der empfangenen Anforderung zugehörig ist;
Erlauben (108), wenn sich die dem Kontrollpunkt (506) zugehörige Rolle in der empfohlenen Rollenliste befindet, die der empfangenen Anforderung zugehörig ist, dass der Kontrollpunkt (506) auf dem mindestens einen Knoten des Datenmodells (200) arbeitet;
Bestimmen (110), wenn sich die dem Kontrollpunkt (506) zugehörige Rolle nicht in der empfohlenen Rollenliste befindet, die der empfangenen Anforderung zugehörig ist, ob der Kontrollpunkt (506) eine Rolle hat, die für ein Arbeiten in Bezug auf den mindestens einen Knoten des Datenmodells (200) auf Grundlage der Daten der Zugriffskontrollliste (ACL / Access Control List), die jedem des mindestens einen Knoten zugehörig sind, geeignet ist;
Erlauben (108), wenn der Kontrollpunkt (506) eine Rolle hat, die für ein Arbeiten in Bezug auf den mindestens einen Knoten des Datenmodells (200) auf Grundlage der ACL-Daten, die jedem des mindestens einen Knoten zugehörig sind, geeignet ist, dass der Kontrollpunkt (506) auf dem mindestens einen Knoten des Datenmodells (200) arbeitet; und
Zurückgeben (112), wenn der Kontrollpunkt (506) keine Rolle hat, die für ein Arbeiten in Bezug auf den mindestens einen Knoten des Datenmodells (200) auf Grundlage der ACL-Daten, die jedem des mindestens einen Knoten zugehörig sind, geeignet ist, von einer Fehlermeldung auf einer Anzeige des Kontrollpunkts (506).

2. Verfahren nach Anspruch 1, wobei die Anforderung zum Arbeiten auf dem Datenmodell (200) eine Anforderung enthält, eine Operation auszuführen, die aus einer Gruppe ausgewählt wurde, die eine Zugriffsoperation, eine Modifizieroperation und eine Leseoperation auf dem Datenmodell (200) enthält.

3. Verfahren nach Anspruch 1, wobei der mindestens eine Knoten Blattknoten, Einzelinstanzknoten, Mehrfachinstanzknoten und Instanzknoten enthält.

4. Verfahren nach Anspruch 1, wobei die dem Kontrollpunkt (506) zugehörige Rolle eine Rolle ist, die aus einer Gruppe ausgewählt wurde, die eine grundlegende Rolle, eine öffentliche Rolle, eine Admin-Rolle und eine lieferantendefinierte Rolle enthält.

5. Verfahren nach Anspruch 1, wobei die jedem des mindestens einen Knoten zugehörigen Daten eine Knotenkennung enthalten, die einem Zugriffselement, einem Leseelement und einem Modifizierelement zugehörig ist.

6. Verfahren nach Anspruch 2, wobei das Erlauben, dass der Kontrollpunkt (506) auf dem mindestens einen Knoten des Datenmodells (200) arbeitet, aufweist:
Ermöglichen, dass der Kontrollpunkt (506) auf Konfigurationsinformationen zugreift, die auf dem mindestens einen Knoten des Datenmodells (200) gespeichert sind.

7. Verfahren nach Anspruch 2, wobei das Erlauben, dass der Kontrollpunkt (506) auf dem mindestens einen Knoten des Datenmodells (200) arbeitet, aufweist:
Ermöglichen, dass der Kontrollpunkt (506) mindestens einen Knoten liest, der dem mindestens einen Knoten des Datenmodells (200) zugehörig ist.

8. Verfahren nach Anspruch 2, wobei das Erlauben, dass der Kontrollpunkt (506) auf dem mindestens einen Knoten des Datenmodells (200) arbeitet, aufweist:
Ermöglichen, dass der Kontrollpunkt (506) mindestens einen Knoten modifiziert, der dem mindestens einen Knoten des Datenmodells (200) zugehörig ist.

9. Verfahren nach Anspruch 1, wobei das Bestimmen, ob der Kontrollpunkt (506) eine Rolle hat, die für ein Arbeiten in Bezug auf den mindestens einen Knoten des Datenmodells (200) auf Grundlage der ACL-Daten, die jedem des mindestens einen Knoten zugehörig sind, geeignet ist, aufweist:
a. Bestimmen einer Knotenkennung, die einem Knoten des Datenmodells (200) in der empfangenen Anforderung zugehörig ist;
b. Abrufen der ACL-Daten, die dem Knoten des Datenmodells (200) zugehörig sind, auf Grundlage der Knotenkennung;
c. Bestimmen, ob die dem Kontrollpunkt (506) zugehörige Rolle mit einer Rolle übereinstimmt, die berechtigt ist, die angeforderte Operation auf dem Knoten in den ACL-Daten auszuführen;
d. Bestimmen, wenn die dem Kontrollpunkt (506) zugehörige Rolle mit einer Rolle übereinstimmt, die berechtigt ist, die angeforderte Operation auf dem Knoten in den ACL-Daten auszuführen, ob noch irgendein anderer Knoten in der empfangenen Anforderung vorhanden ist; wenn noch ein anderer Knoten in der empfangenen Anforderung vorhanden ist, wiederholen der vorgenannten Schritte a, b, c, d, bis alle Knoten verarbeitet sind;
Erlauben, wenn kein anderer Knoten in der empfangenen Anforderung vorhanden ist, dass der Kontrollpunkt (506) auf mindestens einem Knoten des Datenmodells (200) arbeitet.

10. Verfahren nach Anspruch 9, wobei das Bestimmen, ob die dem Kontrollpunkt zugehörige Rolle mit irgendeiner Rolle in den ACL-Daten übereinstimmt, die dem Knoten zugehörig sind, aufweist:
Zurückgeben, wenn die dem Kontrollpunkt zugehörige Rolle nicht mit irgendeiner Rolle in den ACL-Daten übereinstimmt, die dem Knoten zugehörig sind, von einer Fehlermeldung auf der Anzeige des Kontrollpunkts (506).

11. Vorrichtung, aufweisend:
einen Prozessor;
einen mit dem Prozessor verbundenen Arbeitsspeicher;
ein Konfigurationsmanagement-Service-, CMS (Configuration Management Service), Modul (504), das in dem Prozessor enthalten ist, zum Empfangen einer Anforderung zum Arbeiten auf mindestens einem Knoten eines Datenmodells (200) von einem Kontrollpunkt (506), wobei das Datenmodell (200) eine Mehrzahl von Knoten enthält, wobei jeder der Mehrzahl von Knoten Konfigurationsinformationen enthält, zum Bestimmen einer dem Kontrollpunkt (506) zugehörigen Rolle auf Grundlage der empfangenen Anforderung, zum Bestimmen, ob die dem Kontrollpunkt (506) zugehörige Rolle sich in einer empfohlenen Rollenliste befindet, die der empfangenen Anforderung zugehörig ist, zum Erlauben, wenn sich die dem Kontrollpunkt (506) zugehörige Rolle in der empfohlenen Rollenliste befindet, die der empfangenen Anforderung zugehörig ist, dass der Kontrollpunkt (506) auf dem mindestens einen Knoten des Datenmodells (200) arbeitet, zum Bestimmen, wenn sich die dem Kontrollpunkt (506) zugehörige Rolle nicht in der empfohlenen Rollenliste befindet, die der empfangenen Anforderung zugehörig ist, ob der Kontrollpunkt (506) eine Rolle hat, die für ein Arbeiten in Bezug auf den mindestens einen Knoten des Datenmodells (200) auf Grundlage der Daten der Zugriffskontrollliste, ACL, die jedem des mindestens einen Knoten zugehörig sind, geeignet ist, zum Erlauben, wenn der Kontrollpunkt (506) eine Rolle hat, die für ein Arbeiten in Bezug auf den mindestens einen Knoten des Datenmodells (200) auf Grundlage der ACL-Daten, die jedem des mindestens einen Knoten zugehörig sind, geeignet ist, dass der Kontrollpunkt (506) auf dem mindestens einen Knoten des Datenmodells (200) arbeitet, und zum Zurückgeben, wenn der Kontrollpunkt (506) keine Rolle hat, die für ein Arbeiten in Bezug auf den mindestens einen Knoten des Datenmodells (200) auf Grundlage der ACL-Daten, die jedem des mindestens einen Knoten zugehörig sind, geeignet ist, einer Fehlermeldung auf einer Anzeige des Kontrollpunkts (506).

12. Vorrichtung nach Anspruch 11, wobei die Anforderung zum Arbeiten auf dem Datenmodell (200) eine Anforderung enthält, eine Operation auszuführen, die aus einer Gruppe ausgewählt wurde, die eine Zugriffsoperation, eine Modifizieroperation und eine Leseoperation auf dem Datenmodell (200) enthält.

13. Vorrichtung nach Anspruch 11, wobei die dem Kontrollpunkt (506) zugehörige Rolle eine von einer grundlegenden Rolle, einer öffentlichen Rolle, einer Admin-Rolle und lieferantendefinierten Rollen ist.

14. Vorrichtung nach Anspruch 11, wobei die jedem des mindestens einen Knoten zugehörigen ACL-Daten eine Knotenkennung enthalten, die einem Zugriffselement, einem Leseelement und einem Modifizierelement zugehörig ist.

15. Heimnetzwerksystem, aufweisend:
mindestens einen Kontrollpunkt (506) zum Aufrufen einer Anforderung zum Arbeiten aus einem oder mehreren Knoten eines Datenmodells (200), wobei das Datenmodell (200) eine Mehrzahl von Knoten aufweist, wobei jeder der Mehrzahl von Knoten Konfigurationsinformationen darstellt; und
mindestens eine Kontrolleinheit, die kommunikativ mit dem mindestens einen Kontrollpunkt (506) verbunden ist zum Bestimmen einer dem mindestens einen Kontrollpunkt (506) zugehörigen Rolle auf Grundlage der empfangenen Anforderung, zum Bestimmen, ob die dem mindestens einen Kontrollpunkt (506) zugehörige Rolle sich in einer empfohlenen Rollenliste befindet, die der empfangenen Anforderung zugehörig ist, zum Erlauben, wenn sich die dem mindestens einen Kontrollpunkt (506) zugehörige Rolle in der empfohlenen Rollenliste befindet, die der empfangenen Anforderung zugehörig ist, dass der mindestens eine Kontrollpunkt (506) auf dem mindestens einen Knoten des Datenmodells (200) arbeitet, zum Bestimmen, wenn sich die dem mindestens einen Kontrollpunkt (506) zugehörige Rolle nicht in der empfohlenen Rollenliste befindet, die der empfangenen Anforderung zugehörig ist, ob der mindestens eine Kontrollpunkt (506) eine Rolle hat, die für ein Arbeiten in Bezug auf den mindestens einen Knoten des Datenmodells (200) auf Grundlage der ACL-Daten, die jedem des mindestens einen Knoten zugehörig sind, geeignet ist, zum Erlauben, wenn der mindestens eine Kontrollpunkt (506) eine Rolle hat, die für ein Arbeiten in Bezug auf den mindestens einen Knoten des Datenmodells (200) auf Grundlage der ACL-Daten, die jedem des mindestens einen Knoten zugehörig sind, geeignet ist, dass der mindestens eine Kontrollpunkt (506) auf dem mindestens einen Knoten des Datenmodells (200) arbeitet, und zum Zurückgeben, wenn der mindestens eine Kontrollpunkt (506) keine Rolle hat, die für ein Arbeiten in Bezug auf den mindestens einen Knoten des Datenmodells (200) auf Grundlage der ACL-Daten, die jedem des mindestens einen Knoten zugehörig sind, geeignet ist, einer Fehlermeldung auf einer Anzeige des mindestens einen Kontrollpunkts (506).

## Revendications

1. Procédé mis en oeuvre par ordinateur permettant de sécuriser un accès à des informations de configuration mémorisées dans des modèles de données (200) dans un environnement de réseau domestique comportant au moins un point de contrôle (506) et au moins un dispositif de contrôle (502), le procédé comprenant :
la réception (102), par l'au moins un dispositif de contrôle (502), en provenance d'un point de contrôle (506), d'une demande de mise en oeuvre sur au moins un noeud d'un modèle de données (200), dans lequel le modèle de données (200) comprend plusieurs noeuds, chacun des plusieurs noeuds représentant des informations de configuration ;
la détermination (104) d'un rôle associé au point de contrôle (506) sur la base de la demande reçue ;
la détermination (106) de la présence éventuelle du rôle associé au point de contrôle (506) dans une liste de rôles recommandés associée à la demande reçue ;
l'autorisation (108), si le rôle associé au point de contrôle (506) est présent dans la liste de rôles recommandés associée à la demande reçue, de mise en oeuvre du point de contrôle (506) sur l'au moins un noeud du modèle de données (200) ;
la détermination (110), si le rôle associé au point de contrôle (506) est absent de la liste de rôles recommandés associée à la demande reçue, du fait que le point de contrôle (506) a un rôle approprié de mise en oeuvre par rapport à l'au moins un noeud du modèle de données (200) sur la base de données d'une liste de contrôle d'accès, ACL, associées à chaque noeud de l'au moins un noeud ;
l'autorisation (108), si le point de contrôle (506) a un rôle approprié de mise en oeuvre par rapport à l'au moins un noeud du modèle de données (200) sur la base des données d'ACL associées à chaque noeud de l'au moins un noeud, de mise en oeuvre du point de contrôle (506) sur l'au moins un noeud du modèle de données (200) ; et
le renvoi (112), si le point de contrôle (506) n'a pas de rôle approprié de mise en oeuvre par rapport à l'au moins un noeud du modèle de données (200) sur la base des données d'ACL associées à chaque noeud de l'au moins un noeud, d'un message d'erreur sur un dispositif d'affichage du point de contrôle (506).

2. Procédé selon la revendication 1, dans lequel la demande de mise en oeuvre sur le modèle de données (200) comprend une demande d'exécution d'une opération sélectionnée parmi un groupe comprenant une opération d'accès, une opération de modification et une opération de lecture sur le modèle de données (200).

3. Procédé selon la revendication 1, dans lequel l'au moins un noeud comprend des noeuds feuilles, des noeuds d'instance unique, des noeuds multi-instance et des noeuds d'instance.

4. Procédé selon la revendication 1, dans lequel le rôle associé au point de contrôle (506) est un rôle sélectionné dans un groupe constitué par un rôle de base, un rôle public, un rôle administrateur et un rôle défini de fournisseur.

5. Procédé selon la revendication 1, dans lequel les données d'ACL associées à chaque noeud de l'au moins un noeud comprennent un identifiant de noeud qui est associé à un élément d'accès, à un élément de lecture et à un élément de modification.

6. Procédé selon la revendication 2, dans lequel l'autorisation de mise en oeuvre du point de contrôle (506) sur l'au moins un noeud du modèle de données (200) comprend :
l'autorisation d'accès, par le point de contrôle (506), à des informations de configuration mémorisées dans l'au moins un noeud du modèle de données (200).

7. Procédé selon la revendication 2, dans lequel l'autorisation de mise en oeuvre du point de contrôle (506) sur l'au moins un noeud du modèle de données (200) comprend :
l'autorisation de lecture, par le point contrôle (506), d'au moins un noeud associé à l'au moins un noeud du modèle de données (200).

8. Procédé selon la revendication 2, dans lequel l'autorisation de mise en oeuvre du point de contrôle (506) sur l'au moins un noeud du modèle de données (200) comprend :
l'autorisation de modification, par le point de contrôle (506), d'au moins un noeud associé à l'au moins un noeud du modèle de données (200).

9. Procédé selon la revendication 1, dans lequel la détermination du fait que le point de contrôle (506) a un rôle approprié de mise en oeuvre par rapport à l'au moins un noeud du modèle de données (200) sur la base des données d'ACL associées à chaque noeud de l'au moins un noeud comprend :
a. la détermination d'un identifiant de noeud associé à un noeud du modèle de données (200) dans la demande reçue ;
b. l'extraction des données d'ACL associées au noeud du modèle de données (200) sur la base de l'identifiant de noeud ;
c. la détermination de la correspondance éventuelle du rôle associé au point de contrôle (506) avec un rôle autorisé d'exécution de l'opération demandée sur le noeud des données d'ACL ;
d. la détermination, si le rôle associé au point de contrôle (506) correspond à un rôle autorisé d'exécution de l'opération demandée sur le noeud des données d'ACL, de l'existence éventuelle d'un quelconque autre noeud restant dans la demande reçue ;
la répétition, s'il reste un autre noeud dans la demande reçue, des étapes a, b, c, d mentionnées ci-dessus jusqu'à ce que tous les noeuds aient été traités ;
l'autorisation, s'il ne reste aucun autre noeud dans la demande reçue, de mise en oeuvre du point de contrôle (506) sur l'au moins un noeud du modèle de données (200).

10. Procédé selon la revendication 9, dans lequel la détermination de la correspondance éventuelle du rôle associé au point de contrôle avec un quelconque rôle dans les données d'ACL associées au noeud comprend :
le renvoi, si le rôle associé au point de contrôle ne correspond pas à un rôle quelconque dans les données d'ACL associées au noeud, d'un message d'erreur sur le dispositif d'affichage du point de contrôle (506).

11. Appareil comprenant :
un processeur ;
une mémoire couplée au processeur ;
un module de service de gestion de configuration, CMS, (504) compris à l'intérieur du processeur destiné à recevoir, d'un point de contrôle (506), une demande de mise en oeuvre sur au moins un noeud d'un modèle de données (200), dans lequel le modèle de données (200) comprend plusieurs noeuds, chaque noeud des plusieurs noeuds représentant des informations de configuration, à déterminer un rôle associé au point de contrôle (506) sur la base de la demande reçue, à déterminer la présence éventuelle du rôle associé au point de contrôle (506) dans une liste de rôles recommandés associée à la demande reçue, à autoriser, si le rôle associé au point de contrôle (506) est présent dans la liste de rôles recommandés associée à la demande reçue, une mise en oeuvre du point de contrôle sur l'au moins un noeud du modèle de données (200), à déterminer, si le rôle associé au point de contrôle (506) est absent de la liste de rôles recommandés associée à la demande reçue, le fait que le point de contrôle (506) ait un rôle approprié de mise en oeuvre par rapport à l'au moins un noeud du modèle de données (200) sur la base de données d'une liste de contrôle d'accès, ACL, associées à chaque noeud de l'au moins un noeud, à autoriser, si le point de contrôle (506) a un rôle approprié de mise en oeuvre par rapport à l'au moins un noeud du modèle de données (200) sur la base des données d'ACL associées à chaque noeud de l'au moins un noeud, une mise en oeuvre du point de contrôle (506) sur l'au moins un noeud du modèle de données (200), et à renvoyer, si le point de contrôle (506) n'a pas de rôle approprié de mise en oeuvre par rapport à l'au moins un noeud du modèle de données (200) sur la base des données d'ACL associées à chaque noeud de l'au moins un noeud, un message d'erreur sur un dispositif d'affichage du point de contrôle (506).

12. Appareil selon la revendication 11, dans lequel la demande de mise en oeuvre sur le modèle de données (200) comprend une demande d'exécution d'une opération sélectionnée dans un groupe comprenant une opération d'accès, une opération de modification et une opération de lecture sur le modèle de données (200).

13. Appareil selon la revendication 11, dans lequel le rôle associé au point de contrôle (506) est l'un d'un rôle de base, d'un rôle public, d'un rôle administrateur et de rôles définis de fournisseurs.

14. Appareil selon la revendication 11, dans lequel les données d'ACL associées à chaque noeud de l'au moins un noeud comprennent un identifiant de noeud associé à un élément d'accès, à un élément de lecture et à un élément de modification.

15. Système de réseau domestique, comprenant :
au moins un point de contrôle (506) destiné à appeler une demande de mise en oeuvre sur un ou plusieurs noeuds d'un modèle de données (200), dans lequel le modèle de données (200) comprend plusieurs noeuds, chaque noeud des plusieurs noeuds représentant des informations de configuration ; et
au moins un dispositif de contrôle couplé de façon à pouvoir communiquer avec l'au moins un point de contrôle (506) pour déterminer un rôle associé à l'au moins un point de contrôle (506) sur la base de la demande reçue, pour déterminer la présence éventuelle du rôle associé à l'au moins un point de contrôle (506) dans une liste de rôles recommandés associée à la demande reçue, pour autoriser, si le rôle associé à l'au moins un point de contrôle (506) est présent dans la liste de rôles recommandés associée à la demande reçue, une mise en oeuvre de l'au moins un point de contrôle (506) sur l'au moins un noeud du modèle de données (200), pour déterminer, si le rôle associé à l'au moins un point de contrôle (506) est absent de la liste de rôles recommandés associée à la demande reçue, le fait que l'au moins un point de contrôle (506) ait un rôle approprié de mise en oeuvre par rapport à l'au moins un noeud du modèle de données (200) sur la base de données d'une liste de contrôle d'accès, ACL, associées à chaque noeud de l'au moins un noeud, pour autoriser, si l'au moins un point de contrôle (506) a un rôle approprié de mise en oeuvre par rapport à l'au moins un noeud du modèle de données (200) sur la base des données d'ACL associées à chaque noeud de l'au moins un noeud, une mise en oeuvre de l'au moins un point de contrôle (506) sur l'au moins un noeud du modèle de données (200), et pour renvoyer, si l'au moins un point de contrôle (506) n'a pas de rôle approprié de mise en oeuvre par rapport à l'au moins un noeud du modèle de données (200) sur la base des données d'ACL associées à chaque noeud de l'au moins un noeud, un message d'erreur sur un dispositif d'affichage de l'au moins un point de contrôle (506).
